# EUROPÄISCHE PATENTANMELDUNG

(11) **EP 3 685 910 A2**
(43) Veröffentlichungstag der Anmeldung: **29.07.2020**
(21) Anmeldenummer: 20153563.0
(22) Anmeldetag: 24.01.2020
(51) Int. Cl.: B01F 3/04, B33Y 80/00

(54) **RÜHRORGANVORRICHTUNG**

(30) Priorität: 25.01.2019 DE 102019101934
(71) Anmelder: EKATO Rühr- und Mischtechnik GmbH, 79650 Schopfheim (DE)
(72) Erfinder: Dr. Last, Wolfgang, 79539 Lörrach (DE); Bird, Dennis, 90530 Wendelstein (DE)
(74) Vertreter: Daub, Thomas

(57) **Zusammenfassung**

Die Erfindung geht aus von einer Rührorganvorrichtung (10a; 10b; 10c; 10d; 10e), insbesondere zum Vermischen eines Fluids mit wenigstens einem weiteren Fluid, mit zumindest einer um eine Drehachse (12a; 12b; 12c; 12d; 12e) drehbaren Fluiddispergiereinheit (14a; 14b; 14c; 14d; 14e), welche wenigstens eine Austrittsöffnung (16a; 16b; 16c; 16d; 16e) für zumindest einen Fluidaustritt aufweist.

Es wird vorgeschlagen, dass die Rührorganvorrichtung (10a; 10b; 10c; 10d; 10e) zumindest eine Optimierungseinheit (18a; 18b; 18c; 18d; 18e) aufweist, welche in zumindest einem Betriebszustand zumindest einen Differenzdruck an der Austrittsöffnung (16a; 16b; 16c; 16d; 16e) erhöht.

## Beschreibung

### Stand der Technik

Die Erfindung betrifft eine Rührorganvorrichtung nach dem Oberbegriff des Anspruchs 1.

Aus der EP 0 993 862 A2 ist bereits eine Rührorganvorrichtung bekannt, welche ein Gas in einer Flüssigkeit dispergiert. Dabei wird das Gas über eine Hohlwelle eingesaugt und über Austrittsöffnungen in radialer Richtung in die Flüssigkeit gebracht.

Ferner ist aus der EP 1 243 313 A2 ein Rührorgan und ein Verfahren zum Mischen eines Gases mit einer Flüssigkeit oder einer Flüssigkeit mit einer weiteren Flüssigkeit bekannt, wobei das Rührorgan eine Hohlwelle zum Einsaugen des zu mischenden Gases oder Flüssigkeit aufweist und einen Einsaugvorgang mittels Erzeugung einer negativen Druckdifferenz in Gang setzt und das zu mischende Gas oder Flüssigkeit über Auslassöffnungen nach außen befördert.

Die Aufgabe der Erfindung besteht insbesondere darin, eine gattungsgemäße Vorrichtung mit verbesserten Dispergiereigenschaften bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Rührorganvorrichtung, insbesondere zum Vermischen eines Fluids mit wenigstens einem weiteren Fluid und/oder insbesondere zum Dispergieren eines Fluids in wenigstens einem weiteren Fluid, mit zumindest einer um eine Drehachse drehbaren Fluiddispergiereinheit, welche wenigstens eine Austrittsöffnung für zumindest einen Fluidaustritt aufweist.

Es wird vorgeschlagen, dass die Rührorganvorrichtung zumindest eine Optimierungseinheit aufweist, welche in zumindest einem Betriebszustand, insbesondere in zumindest einem Betriebszustand mit festdefinierter Drehzahl der Fluiddispergiereinheit, zumindest einen Differenzdruck an der Austrittsöffnung erhöht.

Dadurch können vorteilhaft Dispergiereigenschaften verbessert werden. Besonders vorteilhaft kann ein Stoffübergang des Fluids, insbesondere als dispergierte Phase, in das weitere Fluid, insbesondere als Dispersionsmittel, optimiert werden. Vorteilhaft kann eine Dispergierleistung gesteigert werden. Insbesondere kann eine gleichmäßige Dispersion herstellbar sein. Ferner können mehrere Fluide, welche insbesondere unterschiedliche Phasen, insbesondere Flüssigphasen, bilden, miteinander vermischt werden. Zudem kann eine Phasengrenzfläche zwischen dem Fluid und dem weiteren Fluid erhöht werden. Insbesondere kann durch die Rührorganvorrichtung und insbesondere innerhalb der Rührorganvorrichtung eine optimierte Fluidströmung erzeugt werden. Vorzugsweise können Kosten für eine Herstellung einer Dispersion minimiert werden. Vorteilhaft können Wartungs- und/oder Betriebskosten minimiert werden. Außerdem können Energie- und/oder Material- und/oder Rohstoffkosten minimiert werden. Vorteilhaft kann eine chemische Reaktion und/oder eine Reaktionsgeschwindigkeit einer chemischen Reaktion zwischen dem Fluid oder zumindest einer Komponente des Fluids mit dem weiteren Fluid oder mit zumindest einer weiteren Komponente des weiteren Fluids begünstigt und/oder erhöht werden.

Unter einer "Rührorganvorrichtung" soll insbesondere ein, insbesondere funktionstüchtiger, Bestandteil, insbesondere eine Konstruktions- und/oder Funktionskomponente, eines Rührorgans, beispielsweise eines Mischers und/oder eines Dispergierers und/oder eines Rührsystems verstanden werden. Insbesondere kann die Rührorganvorrichtung das gesamte Rührorgan umfassen. Besonders vorteilhaft ist die Rührorganvorrichtung dazu vorgesehen, um eine Rotationsachse, insbesondere die Drehachse der Fluiddispergiereinheit, rotiert zu werden, insbesondere bei einem Rührvorgang und/oder einem Mischvorgang und/oder einem Dispergiervorgang. Vorzugsweise ist die Fluiddispergiereinheit und insbesondere die Rührorganvorrichtung bei einer Ansicht entlang der Drehachse betrachtet punktsymmetrisch, insbesondere bezüglich einer Längserstreckung der Drehachse, ausgebildet. Vorteilhaft verläuft in einem montierten Zustand die Drehachse parallel zu einer Vertikalrichtung, vorzugsweise in Richtung einer wirkenden Schwerkraft, insbesondere in einem Normalbetriebszustand des Rührorgans, wobei die Vertikalrichtung vorzugsweise senkrecht zu einem Untergrund verläuft.

Unter einer "Austrittsöffnung" soll insbesondere eine Öffnung verstanden werden, an welcher das Fluid in dem Betriebszustand aus der Fluiddispergiereinheit austritt und/oder aus der Fluiddispergiereinheit befördert wird, womit insbesondere der Dispergiervorgang initiiert wird. Insbesondere kann die Austrittsöffnung bei einer Blickrichtung zumindest im Wesentlichen senkrecht zu einer Haupterstreckungsebene der Austrittsöffnung eine viereckige und vorteilhaft eine rechteckige Form aufweisen. Alternativ kann die Austrittsöffnung bei einer Blickrichtung zumindest im Wesentlichen senkrecht zur Haupterstreckungsebene der Austrittsöffnung eine mehreckige, eine ovale, eine runde oder eine halbrunde Form aufweisen.

Unter einer "Fluiddispergiereinheit" soll insbesondere eine Einheit verstanden werden, welche in dem Betriebszustand das Fluid, insbesondere in Form einer dispersen Phase, in das weitere Fluid, welches insbesondere als Dispersionsmittel fungiert, vorteilhaft unmittelbar, verteilt und/oder dispergiert und insbesondere durch Aufwendung einer Energie, insbesondere durch Rühren, Schütteln, Schlagen, Einspritzen, und/oder durch, insbesondere akustische, Schwingungen eine Dispersion herstellt.

Insbesondere weist die Fluiddispergiereinheit wenigstens einen Dispergierflügel auf, welcher insbesondere die Austrittsöffnung aufweist. Insbesondere ist der Dispergierflügel, insbesondere in einer Drehebene der Fluiddispergiereinheit, gebogen ausgebildet. Vorteilhaft erstreckt sich der Dispergierflügel von einem mittelpunktnahen Bereich der Fluiddispergiereinheit radial nach außen. Insbesondere ist der Dispergierflügel hohl ausgebildet und definiert dadurch zumindest einen Fluidkanal. Insbesondere ist der Dispergierflügel einstückig mit einem Rührblatt der Rührorganverbindung ausgebildet. Vorteilhaft ist der Dispergierflügel als Rührblatt ausgebildet.

Vorteilhaft ist die Haupterstreckungsebene der Austrittsöffnung zumindest im Wesentlichen entgegen einer Drehrichtung der Fluiddispergiereinheit in zumindest einem Betriebszustand der Fluiddispergiereinheit orientiert. Unter "zumindest im Wesentlichen entgegen" soll in diesem Zusammenhang insbesondere verstanden werden, dass eine Flächennormale einer Ebene oder einer Haupterstreckungsebene einer Einheit mit einer Referenzrichtung einen Winkel einschließt, welcher insbesondere weniger als 25 %, vorzugsweise weniger als 10 % und besonders bevorzugt weniger als 5 % von 180° abweicht. Insbesondere stimmt eine Austrittsrichtung des Fluids aus der Austrittsöffnung mit der Richtung der Flächennormalen zumindest im Wesentlichen überein. Darunter, dass eine Ebene und/oder eine Fläche einer Einheit in einer bestimmten Weise "orientiert" ist, soll insbesondere eine Richtung einer Flächennormale der Ebene und/oder der Fläche und/oder der Haupterstreckungsebene einer Einheit verstanden werden, wobei die Flächennormale insbesondere an einer Außenseite der Einheit angeordnet ist. Unter einer "Haupterstreckungsebene" eines Objekts, insbesondere einer Öffnung und/oder einer Einheit, soll insbesondere eine Ebene verstanden werden, welche parallel zu einer größten Seitenfläche eines kleinsten gedachten Quaders ist, welcher das Objekt gerade noch vollständig umschließt, und insbesondere durch den Mittelpunkt des Quaders verläuft.

Vorteilhaft ist die Fluiddispergiereinheit in dem Betriebszustand insbesondere vollständig in das weitere Fluid eingetaucht. Insbesondere weist die Rührorganvorrichtung eine Rührwelle auf, welche vorteilhaft als Hohlwelle ausgebildet ist. Die Rührwelle verläuft vorteilhaft parallel zur Drehachse, wobei insbesondere die Drehachse innerhalb der Rührwelle verläuft. Die Fluiddispergiereinheit ist in dem Betriebszustand insbesondere an der Rührwelle drehfest angeordnet und insbesondere strömungstechnisch mit dieser verbunden. Insbesondere ist die Fluiddispergiereinheit an der Rührwelle mittels einer kraft- und/oder formschlüssigen Verbindung angeordnet, wobei die Verbindung insbesondere eine Flansch-, eine Schweiß- und/oder eine Schrumpfverbindung sein kann. Insbesondere weist die Rührwelle zumindest eine Eintrittsöffnung auf. Vorteilhaft weist die Rührwelle eine Vielzahl an Eintrittsöffnungen auf. Unter einer "Eintrittsöffnung der Rührwelle" soll insbesondere eine Öffnung verstanden werden, an welcher das Fluid in die Rührwelle eintritt und/oder eingesaugt wird. Die Rührwelle ist insbesondere durch einen Motor, vorteilhaft durch einen Elektromotor der Rührorganvorrichtung in eine Drehung versetzbar. Insbesondere ist die Rührwelle in dem Betriebszustand parallel zu einer wirkenden Schwerkraft orientiert. Vorzugsweise steht der Dispergierflügel in dem Betriebszustand in einer strömungstechnisch kommunizierenden Verbindung mit der Rührwelle. Insbesondere sind die Eintrittsöffnung und die Austrittsöffnung strömungstechnisch miteinander verbunden. Insbesondere weist die Optimierungseinheit zumindest eine Kontureinheit auf, welche dazu vorgesehen ist, insbesondere einen Eintritt des Fluids in zumindest die Eintrittsöffnung zu begünstigen. Die Kontureinheit ist insbesondere an der Rührwelle angeordnet. Die Kontureinheit weist insbesondere zumindest ein Konturelement auf, welches vorteilhaft einer der Eintrittsöffnungen zugeordnet ist. Insbesondere ist jeder Eintrittsöffnung zumindest ein Konturelement zugeordnet. Vorteilhaft ist das Konturelement als Leitblech ausgebildet.

Unter einer "Optimierungseinheit" soll insbesondere ein funktionstüchtiger konstruktiver und/oder funktioneller Bestandteil der Rührorganvorrichtung verstanden werden, welcher in dem Betriebszustand einen insbesondere zumindest im Wesentlichen durch die Fluiddispergiereinheit durchgeführten Dispergiervorgang, insbesondere gegenüber einer entsprechenden Rührorganvorrichtung ohne Optimierungseinheit, beeinflusst und vorteilhaft begünstigt und/oder einen Wirkungsgrad des Dispergiervorgangs und/oder der Fluiddispergiereinheit erhöht. Vorteilhaft weist die Optimierungseinheit mehrere Bestandteile auf, welche in dem Betriebszustand insbesondere den Dispergiervorgang auf eine unterschiedliche Weise, insbesondere unabhängig voneinander, beeinflussen können. Die Optimierungseinheit kann in dem Betriebszustand insbesondere ein Strömungsverhalten des Fluids und/oder des weiteren Fluids beeinflussen. Insbesondere erhöht die Optimierungseinheit in dem Betriebszustand den Differenzdruck an der Austrittsöffnung, und zwar insbesondere eine Druckdifferenz zwischen einem vor der Austrittsöffnung anstehenden Innendruck und einem hinter der Austrittsöffnung herrschenden Außendruck, vorteilhaft mittels geometrischer Strukturen und/oder geometrischer Konstruktionselemente, insbesondere bei einer gleichbleibenden Ausdehnung der Fluiddispergiereinheit, wie beispielsweise bei einem gleichbleibenden Durchmesser der Fluiddispergiereinheit und/oder bei einer gleichbleibenden Ausdehnung der Austrittsöffnung.

Unter einem "Differenzdruck" soll insbesondere ein Druckunterschied zwischen einem Innendruck und einem Außendruck in dem Betriebszustand, insbesondere bei festdefinierter Drehzahl, verstanden werden. Insbesondere herrscht der Innendruck im Inneren der Fluiddispergiereinheit, insbesondere unmittelbar vor der Austrittsöffnung. Der Innendruck ist insbesondere gleich einer Differenz zwischen einem Fluiddruck an der Eintrittsöffnung der Rührwelle und einem insbesondere innerhalb der Rührwelle und innerhalb der Fluiddispergiereinheit entstehenden Druckverlust, insbesondere aufgrund einer Reibung und/oder Strömungswirbelbildung. Insbesondere herrscht der Außendruck außerhalb der Fluiddispergiereinheit unmittelbar hinter der Austrittsöffnung, insbesondere in einer Dispergierzone. Unter einer "Dispergierzone" soll insbesondere ein Bereich um die Fluiddispergiereinheit verstanden werden, in welchem zu jedem Zeitpunkt des Betriebszustands die Vermischung des Fluids mit dem weiteren Fluid und/oder der Dispersionsvorgang des Fluids in dem weiteren Fluid und/oder eine chemische Reaktion zwischen dem Fluid oder zumindest einer Komponente des Fluids mit dem weiteren Fluid oder mit zumindest einer weiteren Komponente des weiteren Fluids zu wenigstens einem Großteil erfolgt. Unter dem Ausdruck "zu wenigstens einem Großteil" sollen dabei insbesondere zumindest zu 55 %, vorteilhaft zumindest zu 65 %, vorzugsweise zumindest zu 75 %, besonders bevorzugt zumindest zu 85 % und besonders vorteilhaft zumindest zu 95 % verstanden werden. Unter einem "Fluid" und einem "weiteren Fluid" soll insbesondere ein Gas oder ein Gasgemisch und/oder eine Flüssigkeit oder ein Flüssigkeitsgemisch, und/oder ein Gas-Flüssigkeitsgemisch und/oder Feststoff-Flüssigkeitsgemisch oder Gas-Feststoff-Flüssigkeitsgemisch verstanden werden. Insbesondere kann das Fluid und/oder das weitere Fluid als zwei-Phasen- oder als drei-Phasen-Gemisch oder zwei-Phasen- oder drei-Phasen-Dispersion vorliegen. Insbesondere kann das Fluid und/oder das weitere Fluid als Emulsion vorliegen. Insbesondere soll unter dem Fluid die disperse Phase und unter dem weiteren Fluid das Dispersionsmittel verstanden werden. Vorteilhaft ist das Fluid gasförmig. Vorteilhaft ist das weitere Fluid flüssig, als Gas-Flüssigkeitsgemisch oder als Feststoff-Flüssigkeitsgemisch oder als Gas-Feststoff-Flüssigkeitsgemisch ausgebildet. Vorteilhaft ist das weitere Fluid als Suspension ausgebildet, welche insbesondere zumindest einen Feststoff, welcher insbesondere als Katalysator ausgebildet sein kann, aufweisen kann. Insbesondere begünstigt und/oder verstärkt der Feststoff zumindest teilweise eine Wechselwirkung, beispielsweise eine chemische Wechselwirkung und/oder Reaktion, zumindest einer Komponente des ersten Fluids mit zumindest einer weiteren Komponente des weiteren Fluids. Insbesondere reagiert das Fluid oder zumindest eine Komponente des Fluids zumindest teilweise in einer chemischen Reaktion mit dem weiteren Fluid oder mit zumindest einer weiteren Komponente des weiteren Fluids. Insbesondere können das Fluid und das weitere Fluid jeweils ein Mehrflüssigkeitsgemisch umfassen, in welchem ein Feststoff, insbesondere ein Katalysator, dispergiert und/oder verteilt ist. Beispielsweise kann das Fluid ein Feststoff-Flüssigkeitsgemisch und das weitere Fluid ein Feststoff-Flüssigkeit-Flüssigkeitsgemisch sein, welches zwei weitere Flüssigkeiten und einen Feststoff aufweist, wobei die zwei Flüssigkeiten ein zwei-Phasen-Gemisch bilden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Optimierungseinheit zumindest eine Außendruckoptimierungseinheit aufweist, welche in dem Betriebszustand und insbesondere bei festdefinierter Drehzahl, zumindest einen dem Fluidaustritt entgegenwirkenden Außendruck verringert. Hierdurch kann insbesondere ein Austritt des Fluids aus der Austrittsöffnung begünstigt und vorteilhaft erhöht werden. Insbesondere ist ein Volumenstrom durch die Austrittsöffnung bei konstanten Umgebungsbedingungen proportional zu dem Differenzdruck, welcher insbesondere von dem Außendruck abhängt. Insbesondere reduziert die Außendruckoptimierungseinheit bei festdefinierter Drehzahl der Rührorganvorrichtung den Außendruck insbesondere durch geometrische Strukturen und/oder geometrische Konstruktionselemente. Insbesondere beeinflusst die Außendruckoptimierungseinheit eine Außenfluidströmung, welche insbesondere die Fluiddispergiereinheit innerhalb der Dispergierzone und insbesondere den Dispergierflügel umströmt.

Insbesondere weist der Dispergierflügel eine Außenwandung auf, welche zumindest im Wesentlichen in Drehrichtung orientiert ist. Darunter, dass eine Einheit "zumindest im Wesentlichen in Drehrichtung orientiert" ist, soll hier insbesondere verstanden werden, dass die Flächennormale der Haupterstreckungsebene der Einheit mit der Drehrichtung, insbesondere mit einer Tangente der Drehrichtung, einen Winkel von insbesondere kleiner als 90°, vorteilhaft kleiner als 45°, bevorzugt kleiner als 20° und besonders vorteilhaft kleiner als 10° einschließt.

Darüber hinaus wird vorgeschlagen, dass die Fluiddispergiereinheit eine weitere Austrittsöffnung für zumindest einen weiteren Fluidaustritt aufweist, welche in Drehrichtung der Fluiddispergiereinheit betrachtet vor der Austrittsöffnung angeordnet ist, wobei die Optimierungseinheit, vorteilhaft die Außendruckoptimierungseinheit, in dem Betriebszustand insbesondere bei festdefinierter Drehzahl, zumindest eine Beeinflussung des Fluidaustritts durch den weiteren Fluidaustritt reduziert. Insbesondere weist die Fluiddispergiereinheit wenigstens einen weiteren Dispergierflügel auf, welcher insbesondere die weitere Austrittsöffnung aufweist. Vorteilhaft sind der Dispergierflügel und der weitere Dispergierflügel identisch ausgebildet und können insbesondere durch eine Drehung der Fluiddispergiereinheit um die Drehachse in Deckung gebracht werden. Vorteilhaft sind die Austrittsöffnung und die weitere Austrittsöffnung identisch ausgebildet und können insbesondere durch eine Drehung der Fluiddispergiereinheit um die Drehachse in Deckung gebracht werden. Insbesondere bilden die Austrittsöffnung und die weitere Austrittsöffnung eine Dispersionszelle. Insbesondere bilden zwei aufeinander folgende Austrittsöffnungen die Dispersionszelle. Eine Anzahl der Dispersionszellen ist gleich einer Anzahl der Austrittsöffnungen. Insbesondere kann die Fluiddispergiereinheit mehr als zwei Austrittsöffnungen aufweisen. Die Austrittsöffnungen weisen vorteilhaft einen gegenseitigen Winkelabstand auf, welcher zwischen den am Umfang jeweils nächstliegenden Austrittsöffnungen einen gleichen Wert beträgt. Der Winkelabstand beträgt insbesondere 360°/n, wenn n eine Anzahl der Austrittsöffnungen der Fluiddispergiereinheit ist. Hierdurch kann insbesondere eine Verteilung des Fluids in dem weiteren Fluid vorteilhaft erhöht werden. Dadurch kann insbesondere eine Zeitersparnis bei einer Herstellung einer Mischung und/oder einer Dispersion und/oder einer chemischen Reaktion erzielt werden. Insbesondere kann die weitere Austrittsöffnung in Bezug auf die Drehachse relativ zu der Austrittsöffnung höhenversetzt angeordnet sein. Alternativ oder zusätzlich können die Austrittsöffnung und die weitere Austrittsöffnung in Bezug auf die Drehebene zumindest teilweise entgegenorientiert sein. Vorteilhaft können die Austrittsöffnung zu wenigstens einem Großteil oberhalb der Drehebene und die weitere Austrittsöffnung zu wenigstens einem Großteil unterhalb der Drehebene oder umgekehrt orientiert sein. Hierdurch kann insbesondere die Dispergierzone vergrößert werden. Vorteilhaft spült die durch die Außendruckoptimierungseinheit in dem Betriebszustand erzeugte Außenfluidströmung zumindest eine Wirbelbildung fort, welche insbesondere zumindest teilweise durch einen Austritt des Fluids aus der Austrittsöffnung entsteht und welche sich insbesondere bis an die Außenwandung des Dispergierflügels mit der weiteren Austrittsöffnung fortpflanzt und insbesondere den Außendruck negativ beeinflusst und insbesondere erhöht, wobei die Wirbelbildung insbesondere eine reduzierte mittlere Dichte an der Außenwandung bedingt.

Insbesondere können die Fluiddispergiereinheit und die Optimierungseinheit und insbesondere die Außendruckoptimierungseinheit voneinander verschieden ausgebildet sein. Hierdurch kann insbesondere eine einfache Montage und/oder Herstellung ermöglicht werden. Zusätzlich kann hierdurch insbesondere eine Flexibilität gegenüber verschiedenen Vermisch- und/oder Dispersionsbedingungen durch einen einfachen Austausch der Fluiddispergiereinheit und/oder der Optimierungseinheit, insbesondere der Außendruckoptimierungseinheit, erreicht werden. Insbesondere ist die Außendruckoptimierungseinheit zumindest teilweise an der Rührwelle insbesondere unterhalb, vorteilhaft direkt unterhalb der Fluiddispergiereinheit insbesondere drehfest angeordnet. Die Begriffe "oben", "unten" sowie "oberhalb" und "unterhalb" beziehen sich hierbei insbesondere auf eine Positionierung der Rührorganvorrichtung in zumindest einem Betriebszustand.

Ferner wäre auch denkbar, dass die Fluiddispergiereinheit und die Optimierungseinheit, insbesondere die Außendruckoptimierungseinheit, zumindest teilweise einstückig miteinander ausgebildet sind, wodurch vorteilhaft Herstellungskosten minimiert und insbesondere eine stabile Konstruktion realisiert werden können. Darunter, dass zwei Einheiten "teilweise einstückig" ausgebildet sind, soll insbesondere verstanden werden, dass die Einheiten zumindest ein, insbesondere zumindest zwei, vorteilhaft zumindest drei gemeinsame Elemente aufweisen, die Bestandteil, insbesondere funktionell wichtiger Bestandteil, beider Einheiten sind. Insbesondere kann unter dem Ausdruck "einstückig" hier zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss, vorteilhaft aus einem einzelnen Rohling und/oder durch eine Herstellung in einem Ein- oder Mehrkomponentenspritzverfahren, vorteilhaft in einem 3D-Druckverfahren.

Außerdem wird vorgeschlagen, dass die Optimierungseinheit und insbesondere die Außendruckoptimierungseinheit in dem Betriebszustand zumindest eine Außenfluidströmung erzeugt, welche in zumindest einem Strömungsabschnitt zumindest im Wesentlichen parallel zur Drehachse der Fluiddispergiereinheit ausgerichtet ist. Die Optimierungseinheit, insbesondere die Außendruckoptimierungseinheit, erzeugt vorteilhaft die den Außendruck vermindernde Außenfluidströmung, wobei insbesondere eine Erhöhung einer lokalen mittleren Dichte des weiteren Fluids in dem Nahbereich der Außenwandung erfolgt. Insbesondere entsteht die Außenfluidströmung zumindest teilweise unterhalb der Fluiddispergiereinheit. Insbesondere befördert die Optimierungseinheit, insbesondere die Außendruckoptimierungseinheit das weitere Fluid aus einem dispersionsfernen Bereich in die Dispergierzone. Hierdurch kann vorteilhaft das weitere Fluid, insbesondere ein Katalysator, aus dem dispersionsfernen Bereich in die Dispergierzone befördert werden, wodurch insbesondere eine Vermischung und/oder Dispergierung und/oder eine chemische Reaktion und/oder eine Reaktionsgeschwindigkeit einer chemischen Reaktion optimiert werden kann. Vorteilhaft ist die Außenfluidströmung zu wenigstens einem Großteil von unten nach oben, insbesondere entgegen der Schwerkraft orientiert. Dadurch kann insbesondere ein Austritt des Fluids aus dem Fluidaustritt begünstigt und vorteilhaft erhöht werden. In dem dispersionsfernen Bereich findet insbesondere eine Vermischung des Fluids mit dem weiteren Fluid zu weniger als 50 % einer Gesamtvermischung zu jedem Zeitpunkt des Betriebszustands und/oder ein Dispersionsvorgang des Fluids in dem weiteren Fluid zu weniger als 50 % der Gesamtdispersion und/oder eine chemische Reaktion zwischen dem Fluid oder zumindest einer Komponente des Fluids mit dem weiteren Fluid oder mit zumindest einer weiteren Komponente des weiteren Fluids zu jedem Zeitpunkt des Betriebszustands statt. Insbesondere findet in dem dispersionsfernen Bereich zumindest teilweise eine Entmischung des Fluids und des weiteren Fluids statt.

Eine besonders vollständige und effektive Vermischung und/oder Dispergierung und/oder eine optimierte chemische Reaktion und/oder erhöhte Reaktionsgeschwindigkeit einer chemischen Reaktion kann erreicht werden, wenn die Optimierungseinheit und insbesondere die Außendruckoptimierungseinheit zumindest ein um die Drehachse der Fluiddispergiereinheit drehbares Schaufelblatt zur zumindest teilweisen Erzeugung der Außenfluidströmung aufweist. Insbesondere ist die Haupterstreckungsebene des Schaufelblatts gegenüber einer Vertikalen gekippt. Vorteilhaft weist das Schaufelblatt eine geschwungene Form auf. Insbesondere bewirkt das Schaufelblatt eine Umwälzung des weiteren Fluids. Vorteilhaft weist die Optimierungseinheit und insbesondere die Außendruckoptimierungseinheit zumindest ein weiteres Schaufelblatt auf. Insbesondere ist eine Gesamtanzahl der Schaufelblätter und der weiteren Schaufelblätter gleich der Anzahl der Austrittsöffnungen. Vorzugsweise weisen die einzelnen Schaufelblätter zueinander einen gelichmäßigen Schaufelwinkelabstand auf. Insbesondere ist der Schaufelwinkelabstand gleich dem Winkelabstand. Alternativ kann die Gesamtanzahl der Schaufelblätter von der Anzahl der Austrittsöffnungen, beispielsweise um einen Faktor zwei, abweichen. Insbesondere kann die Gesamtanzahl der Schaufelblätter die Anzahl der Austrittsöffnungen, insbesondere um einen Faktor zwei, übersteigen, wobei insbesondere der Winkelabstand einen größeren, insbesondere doppelt so großen Wert im Vergleich zu dem Schaufelwinkelabstand annimmt. Insbesondere sind das Schaufelblatt und das weitere Schaufelblatt identisch ausgebildet. Vorteilhaft sind alle Schaufelblätter identisch ausgebildet. Vorteilhaft ist die Optimierungseinheit und insbesondere die Außendruckoptimierungseinheit turbinenförmig ausgebildet

Darüber hinaus wird vorgeschlagen, dass das Schaufelblatt der Austrittsöffnung zugeordnet ist. Hierdurch kann insbesondere eine Wirbelbildung an der Außenwandung, vorteilhaft an jeder Außenwandung effizient verhindert werden. Vorteilhaft ist genau ein Schaufelblatt genau einer Austrittsöffnung zugeordnet. Alternativ können mehrere, insbesondere zwei, Schaufelblätter genau einer Austrittsöffnung zugeordnet sein. Insbesondere kann das Schaufelblatt und/oder die mehreren Schaufelblätter derart relativ zur Austrittsöffnung angeordnet sein, dass die zumindest teilweise durch das Schaufelblatt und/oder die mehreren Schaufelblätter erzeugte Außenfluidströmung vorteilhaft direkt an der Außenwandung vorbeiströmt. Insbesondere rotieren das Schaufelblatt und/oder die mehreren Schaufelblätter und die dem Schaufelblatt und/oder den mehreren Schaufelblättern zugeordnete Austrittsöffnung in dem Betriebszustand mit einer gleichen Winkelgeschwindigkeit. Hierdurch kann eine gleichbleibende und/oder konstante Außenfluidströmung erzeugt werden.

Außerdem wird vorgeschlagen, dass das Schaufelblatt entlang der Drehachse betrachtet zur Austrittsöffnung versetzt, insbesondere nach unten versetzt, angeordnet ist. Vorteilhaft ist das Schaufelblatt direkt unterhalb der Fluiddispergiereinheit angeordnet. Insbesondere kann das Schaufelblatt winkelversetzt zur Austrittsöffnung angeordnet sein. Hierdurch kann insbesondere eine vorteilhafte Anströmung der Außenwandung des Dispergierflügels, insbesondere zur Vermeidung von Wirbelbildungen, erreicht werden. Zudem kann vorteilhaft eine optimierte Umwälzung des weiteren Fluids, insbesondere des Katalysators, erzielt werden, wodurch eine Optimierung des Misch- und/oder des Dispersionsvorgangs und/oder der chemischen Reaktion und/oder der Reaktionsgeschwindigkeit der chemischen Reaktion zwischen dem Fluid oder zumindest einer Komponente des Fluids mit dem weiteren Fluid oder mit zumindest einer weiteren Komponente des weiteren Fluids erfolgen kann.

Zudem wird vorgeschlagen, dass die Optimierungseinheit und insbesondere die Außendruckoptimierungseinheit zumindest ein Strömungsleitelement zur, insbesondere vollständigen, Umlenkung der Außenfluidströmung in eine zumindest im Wesentlichen zur Drehachse der Fluiddispergiereinheit senkrechten Richtung aufweist. Hierdurch kann insbesondere eine Wirbelbildung an der Außenwandung des Dispergierflügels zumindest im Wesentlichen vollständig unterbunden werden. Das Strömungsleitelement ist vorteilhaft oberhalb des Dispergierflügels angeordnet. Das Strömungsleitelement ist insbesondere als eine konzentrische, geschlossene Scheibe ausgebildet, durch deren Mittelpunkt die Drehachse verläuft. Insbesondere strömt die Außenfluidströmung nach einer Auslenkung zumindest teilweise durch das Strömungselement, vorteilhaft zumindest im Wesentlichen radial nach außen entlang der Außenwandung des Dispergierflügels. Das Strömungsleitelement ist als passives Bauteil ausgebildet. Alternativ kann das Strömungsleitelement als aktives Bauteil ausgebildet sein, wobei es insbesondere die Außenfluidströmung insbesondere abhängig von einer Drehgeschwindigkeit der Fluiddispergiereinheit beeinflussen kann.

Außerdem wird vorgeschlagen, dass die Optimierungseinheit zumindest eine Innendruckoptimierungseinheit aufweist, welche in dem Betriebszustand zumindest einen den Fluidaustritt begünstigenden Innendruck erhöht. Hierdurch kann insbesondere ein Volumenstrom des Fluids durch die Austrittsöffnung gesteigert werden. Insbesondere ist die Innendruckoptimierungseinheit zumindest teilweise und vorteilhaft vollständig innerhalb der Rührwelle und/oder der Fluiddispergiereinheit angeordnet. Vorteilhaft ist die Innendruckoptimierungseinheit als Formgebung und/oder als geometrisches Konstruktionselement ausgebildet. Insbesondere ist die Innendruckoptimierungseinheit einstückig mit der Fluiddispergiereinheit ausgebildet. Vorteilhaft verringert die Innendruckoptimierungseinheit einen Druckverlust, welcher insbesondere innerhalb der Rührwelle und/oder der Fluiddispergiereinheit entsteht und den Innendruck vermindert.

Ferner wird vorgeschlagen, dass die Optimierungseinheit, insbesondere die eine Innendruckoptimierungseinheit, zumindest eine Fluidförderungseinheit aufweist, welche insbesondere zumindest teilweise einstückig mit der Innendruckoptimierungseinheit ausgebildet sein kann, und welche in dem Betriebszustand eine optimierte, insbesondere eine zumindest weitgehend wirbelfreie, Innenfluidströmung erzeugt. Dadurch kann insbesondere eine gleichmäßige Innenfluidströmung erzeugt werden. Zudem kann insbesondere dadurch eine Verringerung des Differenzdrucks aufgrund einer ungleichmäßigen Innenfluidströmung verringert werden. Die Fluidförderungseinheit ist vorteilhaft drehfest mit der Fluiddispergiereinheit verbunden. Insbesondere fließt in dem Betriebszustand die Innenfluidströmung aus der Rührwelle in Richtung des Fluidkanals des Dispergierflügels und anschließend durch die Austrittsöffnung aus der Fluiddispergiereinheit in die Dispergierzone. Vorteilhaft ist die Fluidförderungseinheit turbinenförmig ausgebildet. Die Fluidförderungseinheit ist insbesondere in einem Zentrum der Fluiddispergiereinheit angeordnet.

Um eine optimierte Beförderung des Fluids in Richtung der Dispergierzone zu ermöglichen, wird vorgeschlagen, dass die Fluidförderungseinheit das Fluid in dem Betriebszustand aus zumindest einem drehachsennahen Bereich der Fluiddispergiereinheit zumindest teilweise radial nach außen in Richtung der Austrittsöffnung befördert. Insbesondere wandelt die Fluidförderungseinheit eine parallel zur Drehachse gerichtete Innenfluidströmung in eine zumindest im Wesentlichen radial gerichtete Innenfluidströmung vorteilhaft in Richtung des Fluidkanals um.

Des Weiteren wird vorgeschlagen, dass die Fluidförderungseinheit zumindest eine Leitschaufel aufweist, welche eine geschwungene Formgebung aufweist und welche das Fluid in dem drehachsennahen Bereich zumindest im Wesentlichen parallel zur Drehachse der Fluiddispergiereinheit befördert. Hierdurch kann insbesondere eine vorteilhafte Beförderung des Fluids aus der Rührwelle in die Fluiddispergiereinheit ermöglicht werden. Vorteilhaft weist die Fluiddispergiereinheit zwei, besonders vorteilhaft mehrere Leitschaufeln auf. Bevorzugt ist eine Anzahl der Leitschaufeln gleich der Anzahl der Austrittsöffnungen. Um eine optimale Beförderung des Fluids zu ermöglichen, ist insbesondere die Leitschaufel dem Fluidkanal zugeordnet.

Darüber hinaus wird vorgeschlagen, dass die Innendruckoptimierungseinheit und/oder die Fluidförderungseinheit vollständig innerhalb der Fluiddispergiereinheit angeordnet sind. Hierdurch kann eine kompakte Konstruktion ermöglicht werden. Insbesondere weist die Fluiddispergiereinheit einen Aufnahmeraum auf, in welchem die Fluidförderungseinheit angeordnet ist. Der Aufnahmeraum ist insbesondere an seinen Seiten zylinderförmig ausgebildet. Insbesondere weist ein Boden des Aufnahmeraums eine mittig angeordnete, spitz zulaufende Erhebung auf. Vorteilhaft ist die Fluidförderungseinheit wandgängig ausgebildet. Insbesondere ist die Rührwelle mit dem Aufnahmeraum strömungstechnisch verbunden. Insbesondere ist der Aufnahmeraum und/oder ein Übergangsbereich des Aufnahmeraums zu dem Fluidkanal glatt und/oder kantenfrei ausgebildet. Hierdurch können Anhaftungen und/oder Anbackungen insbesondere von Feststoffpartikeln innerhalb des Aufnahmeraums vermieden werden. Zudem kann dadurch insbesondere eine Wirbelbildung innerhalb des Aufnahmeraums zumindest teilweise vermieden werden. Ferner kann dadurch insbesondere eine cleaning-in-place-fähige Ausgestaltung des Aufnahmeraums realisiert werden, wodurch insbesondere Wartungskosten minimiert werden können.

Außerdem wird vorgeschlagen, dass mit dem Fluid in Kontakt tretende Oberflächen der Fluidförderungseinheit zumindest im Wesentlichen glatt und/oder kantenfrei ausgebildet sind. Hierdurch können Anhaftungen und/oder Anbackungen insbesondere von Feststoffpartikeln an der Fluidförderungseinheit vermieden werden. Zudem kann dadurch insbesondere eine Wirbelbildung an der Schaufel der Fluidförderungseinheit zumindest teilweise vermindert werden. Ferner kann dadurch insbesondere eine cleaning-in-place-fähige Ausführung der Fluidförderungseinheit realisiert werden, wodurch insbesondere Wartungskosten minimiert werden können.

Zudem wird vorgeschlagen, dass die Fluiddispergiereinheit zumindest eine Turbulenzeinheit zur Beeinflussung des Fluidaustritts und/oder des weiteren Fluidaustritts aufweist. Hierdurch kann insbesondere eine vorteilhafte Verteilung des Fluids nach einem Austreten aus der Austrittsöffnung und/oder aus der weiteren Austrittsöffnung ein insbesondere erhöhter Stoffübergang des Fluids in das weitere Fluid erfolgen. Insbesondere ist die Turbulenzeinheit zumindest teilweise und/oder abschnittsweise, bevorzugt vollständig spiral- und/oder federförmig ausgebildet. Zusätzlich kann die Turbulenzeinheit insbesondere zumindest einen insbesondere gebogenen Stab aufweisen, welcher vorteilhaft entlang der Drehachse der Fluiddispergiereinheit betrachtet in einem äußeren Bereich der Rührorganvorrichtung, insbesondere in Umfangsrichtung der Fluiddispergiereinheit, und insbesondere zwischen den Dispergierflügeln angeordnet ist. Insbesondere weist die Turbulenzeinheit zumindest eine Spirale und/oder eine Spiralfeder, insbesondere eine Zugfeder, auf, welche vorteilhaft in zumindest einem Betriebszustand an dem Stab angeordnet ist und insbesondere um diesen gewickelt ist, sodass sie diesen zumindest teilweise umgibt. Insbesondere weist die Spirale und/oder die Spiralfeder, insbesondere die Zugfeder, in zumindest einem Betriebszustand eine Vorspannung auf. Alternativ oder zusätzlich kann die Turbulenzeinheit zumindest teilweise und/oder abschnittsweise gitterförmig ausgebildet sein. Insbesondere ist die Turbulenzeinheit entlang der Drehachse der Fluiddispergiereinheit betrachtet in einem äußeren Bereich der Rührorganvorrichtung angeordnet. Insbesondere ist eine Haupterstreckungsebene der Turbulenzeinheit parallel, vorteilhaft deckungsgleich, mit einer Haupterstreckungsebene der Fluiddispergiereinheit. Insbesondere ist die Turbulenzeinheit zwischen den Dispergierflügeln angeordnet. Die Turbulenzeinheit ist dazu vorgesehen, einen Übergang des Fluids in das weitere Fluid durch Erzeugung von Turbulenzen und/oder Scherkräften in einem Nahbereich der Turbulenzeinheit zu begünstigen. Insbesondere im Fall, dass das Fluid als gasförmige Phase vorliegt, verringert die Turbulenzeinheit vorteilhaft einen Durchmesser von aus der Austrittsöffnung und/oder aus der weiteren Austrittsöffnung austretenden Primärgasblasen. Die Turbulenzeinheit zerkleinert insbesondere die aus der Austrittsöffnung und/oder aus der weiteren Austrittsöffnung austretenden Primärgasblasen insbesondere aufgrund von Scherkräften in mehrere kleinere Gasblasen. Unter einem "Nahbereich" einer Einheit soll insbesondere ein räumlicher Bereich verstanden werden, welcher die Einheit umgibt und insbesondere vollständig umschließt, wobei der Bereich Raumpunkte aufweist, welche insbesondere nicht Teil der Einheit sind und insbesondere innerhalb von gedachten Kugeln liegen, welche jeweils einen Punkt der Einheit als Mittelpunkt aufweisen mit einem Kugelradius, welcher insbesondere zumindest einer Ausdehnung der Einheit quer zu einer Haupterstreckungsebene der Einheit gleich, vorteilhaft zumindest doppelt, besonders vorteilhaft zumindest dreimal so groß ist im Vergleich zur Ausdehnung der Einheit quer zur Haupterstreckungsebene der Einheit.

Ferner wird vorgeschlagen, dass die Fluiddispergiereinheit zumindest ein im Wesentlichen senkrecht zu der Drehachse angeordnetes Rundrohr aufweist an welchem die Austrittsöffnung angeordnet ist. Die Fluiddispergiereinheit kann mehrere, insbesondere zumindest zwei, vorteilhaft zumindest drei, besonders vorteilhaft zumindest vier, vorzugsweise zumindest fünf und besonders bevorzugt zumindest sechs, im Wesentlichen senkrecht zu der Drehachse angeordnete Rundrohre aufweisen, an welchen jeweils zumindest eine Austrittsöffnung angeordnet ist. Hierdurch kann vorteilhaft eine Rührorganvorrichtung mit verbesserten Dispergiereigenschaften bereitgestellt werden. Insbesondere kann vorteilhaft eine Dispergierleistung gesteigert werden. Unter einem "Rundrohr" soll insbesondere Element der Fluiddispergiereinheit verstanden werden, welches, bei einer Betrachtung senkrecht auf seine Haupterstreckungsebene, einen kreisförmigen und/oder ovalen Querschnitt aufweist. Vorteilhaft ist die Austrittsöffnung in einem von der Drehachse der Fluiddispergiereinheit maximal beabstandeten Bereich angeordnet und weist insbesondere einen kreisförmigen und/oder ovalen Querschnitt auf. Eine längste Außenkante des Rundrohrs kann ausgehend von der Austrittöffnung in Richtung der Drehachse einen geraden Verlauf aufweisen. Vorzugsweise ist der Verlauf der längsten Außenkante des Rundrohrs jedoch ausgehend von der Austrittöffnung in Richtung der Drehachse entgegen der Drehrichtung der Fluiddispergiereinheit gebogen.

Zudem wird vorgeschlagen, dass die Fluiddispergiereinheit in zumindest einer Blickrichtung senkrecht auf die Drehachse zumindest bereichsweise eine Form eines Tragflächenprofils aufweist. Hierdurch können in einem Betriebszustand der Rührorganvorrichtung vorteilhafte Strömungseigenschaften des weiteren Fluids, insbesondere des Dispersionsmittels, erzielt werden. Darunter, dass die Fluiddispergiereinheit "in zumindest einer Blickrichtung senkrecht auf die Drehachse zumindest bereichsweise eine Form eines Tragflächenprofils" aufweist soll insbesondere verstanden werden, dass die Fluiddispergiereinheit zumindest eine Bereich aufweist, dessen Querschnitt, in zumindest einer Blickrichtung senkrecht auf die Drehachse der Fluiddispergiereinheit, die Form eines Tragflächenprofils aufweist, wobei die Haupterstreckungsebene der Austrittsöffnung insbesondere innerhalb dieses Querschnitts liegt. Unter "einer Form eines Tragflächenprofils" soll insbesondere eine geometrische Form eines Bereichs der Fluiddispergiereinheit verstanden werden, welcher zumindest eine längste Außenkante aufweist, deren Verlauf in einem Querschnitt senkrecht zu einer Haupterstreckungsebene des Fluiddispergiereinheit betrachtet, zumindest eine, in Bezug auf die Drehebene der Fluiddispergiereinheit bezogen insbesondere unsymmetrische, Krümmung und/oder Wölbung aufweist. Die Fluiddispergiereinheit kann mehrere Bereiche aufweisen welche jeweils in zumindest einer Blickrichtung senkrecht auf die Drehachse eine Form eines Tragflächenprofils aufweisen. Vorzugsweise weist jede Dispergierzelle der Fluiddispergiereinheit in zumindest einer Blickrichtung senkrecht auf die Drehachse die Form eines Tragflächenprofils auf. Die Fluiddispergiereinheit kann einstückig, beispielsweise durch eine Herstellung in einem Ein- oder Mehrkomponentenspritzverfahren, vorteilhaft in einem 3D-Druckverfahren, ausgebildet sein. Hierdurch kann eine tragflächenprofilförmige Formgebung der Fluiddispergiereinheit mit besonders einfachen technischen mitteln und/oder besonders kostengünstig realisiert werden.

Die erfindungsgemäße Rührorganvorrichtung soll hierbei nicht auf die oben beschriebene Anwendung und Ausführungsform beschränkt sein. Insbesondere kann die erfindungsgemäße Rührorganvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teil eines Rührorgans mit einer Rührorganvorrichtung in einer perspektivischen Seitenansicht,
- Fig. 2: eine perspektivische schematische Darstellung einer Fluiddispergiereinheit der Rührorganvorrichtung und einer Optimierungseinheit der Rührorganvorrichtung mit einer Fluidförderungseinheit,
- Fig. 3: eine vergrößerte schematische Darstellung der in einem Aufnahmeraum der Fluiddispergiereinheit angeordneten Fluidförderungseinheit,
- Fig. 4: eine perspektivische schematische Darstellung einer Fluiddispergiereinheit einer alternativen Rührorganvorrichtung und einer Optimierungseinheit der alternativen Rührorganvorrichtung mit einer Fluidförderungseinheit,
- Fig. 5: eine perspektivische schematische Darstellung einer Fluiddispergiereinheit einer weiteren alternativen Rührorganvorrichtung und einer Optimierungseinheit der weiteren alternativen Rührorganvorrichtung mit einer Fluidförderungseinheit,
- Fig. 6: ein weiteres Ausführungsbeispiel einer Fluiddispergiereinheit einer Rührorganvorrichtung in einer perspektivischen schematischen Darstellung,
- Fig. 7: ein weiteres Ausführungsbeispiel einer Fluiddispergiereinheit einer Rührorganvorrichtung in einer perspektivischen schematischen Darstellung, und
- Fig. 8: eine weitere perspektivische schematische Darstellung der Fluiddispergiereinheit des Ausführungsbeispiels der Figur 7.

### Beschreibung der Ausführungsbeispiele

In den nachfolgend beschriebenen Ausführungsbeispielen sind verschiedene Baueinheiten und/oder Bauteile mehrfach vorhanden. Analog ausgestaltete Bauteile und/oder Baueinheiten, die in den Zeichnungen mit gleichen Bezugszeichen versehen sind, sind zur Vereinfachung in der nachfolgenden Zeichnungsbeschreibung nur einmal beschrieben.

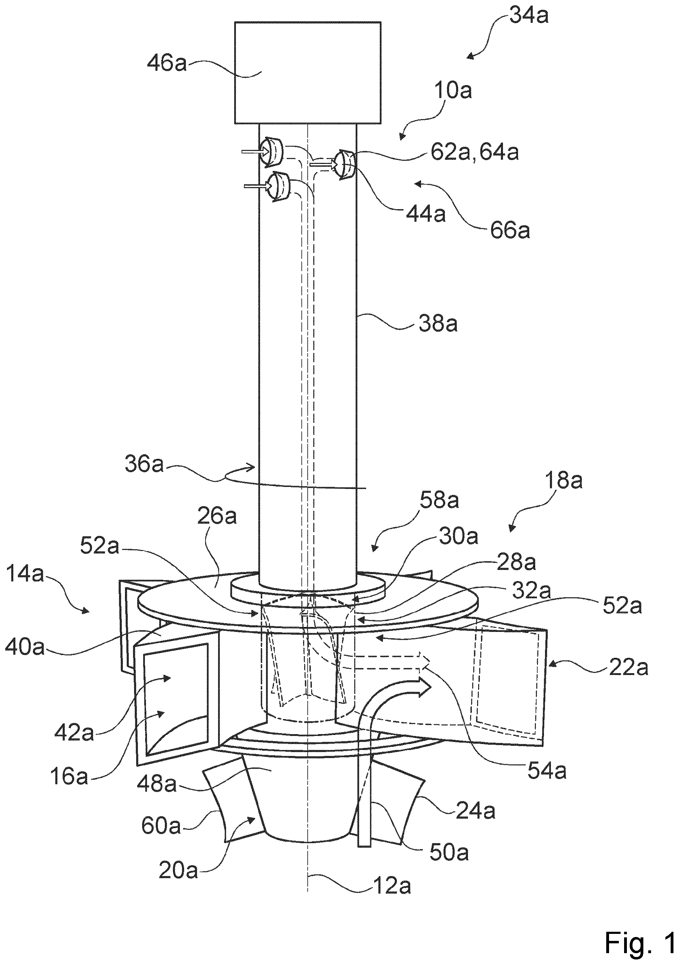

Fig. 1 zeigt einen Teil eines Rührorgans 34a. Das Rührorgan 34a weist eine Rührorganvorrichtung 10a auf. Die Rührorganvorrichtung 10a ist zum Vermischen eines Fluids mit einem weiteren Fluid vorgesehen. Die Rührorganvorrichtung 10a ist zum Dispergieren des Fluids mit dem weiteren Fluid vorgesehen. Das Fluid liegt als gasförmige Phase vor. Das weitere Fluid liegt in einem Ausgangszustand als flüssige Phase vor. In dem Betriebszustand liegt das weitere Fluid als eine Gas-Flüssigkeit-Mischphase vor.

Die Rührorganvorrichtung 10a weist eine Rührwelle 38a auf. Die Rührwelle 38a rotiert in zumindest einem Betriebszustand um eine Drehachse 12a der Rührorganvorrichtung 10a. Die Rührwelle 38a überträgt ein Drehmoment und versetzt an der Rührwelle 38a angeordnete Elemente in eine Drehbewegung. Die Rührwelle 38a ist durch einen Elektromotor 46a des Rührorgans 34a in eine Drehung versetzbar.

Die Rührwelle 38a ist als Hohlwelle ausgebildet. Die Drehachse 12a verläuft innerhalb der Rührwelle 38a. Die Rührwelle 38a ist parallel zur Vertikalen orientiert. Die Rührwelle 38a weist mehrere Eintrittsöffnungen 44a auf. Die Eintrittsöffnungen 44a sind dazu vorgesehen, im Betriebszustand das Fluid einzusaugen.

Die Rührorganvorrichtung 10a weist eine Fluiddispergiereinheit 14a auf. Die Rührwelle 38a ist strömungstechnisch mit der Fluiddispergiereinheit 14a verbunden. Die Fluiddispergiereinheit 14a ist an der Rührwelle 38a drehfest angeordnet. Die Fluiddispergiereinheit 14a ist an der Rührwelle 38a mittels einer kraft- und/oder formschlüssigen Verbindung angeordnet. Die Verbindung ist eine Schraubverbindung. Die Fluiddispergiereinheit 14a ist um die Drehachse 12a drehbar. Die Rührwelle 38a und die Fluiddispergiereinheit 14a weisen in dem Betriebszustand eine gleiche Winkelgeschwindigkeit auf. In dem Betriebszustand ist die Fluiddispergiereinheit 14a vollständig in das weitere Fluid eingetaucht.

Die Fluiddispergiereinheit 14a weist eine Austrittsöffnung 16a auf. Die Austrittsöffnung 16a weist bei einer Blickrichtung senkrecht zu einer Haupterstreckungsebene 68a der Austrittsöffnung 16a eine rechteckige Form auf. Alternativ könnte die Austrittsöffnung 16a bei einer Blickrichtung senkrecht zur Haupterstreckungsebene 68a der Austrittsöffnung 16a eine ovale oder runde Form aufweisen.

Die Fluiddispergiereinheit 14a weist eine weitere Austrittsöffnung 22a auf. Die weitere Austrittsöffnung 22a ist in Drehrichtung 36a der Fluiddispergiereinheit 14a betrachtet vor der Austrittsöffnung 16a angeordnet.

Die Fluiddispergiereinheit 14a weist vier Austrittsöffnungen 16a, 22a auf. Die Austrittsöffnungen 16a, 22a sind jeweils für einen Fluidaustritt vorgesehen. Die Fluiddispergiereinheit 14a weist vier Dispergierflügel 40a auf. Jeder der vier Dispergierflügel 40a definiert jeweils eine der Austrittsöffnungen 16a, 22a. Die Dispergierflügel 40a sind jeweils als Rührblatt ausgebildet.

In dem Betriebszustand sind die Austrittsöffnungen 16a, 22a bei einer Drehung der Fluiddispergiereinheit 14a in Drehrichtung 36a in eine der Drehrichtung 36a entgegengesetzte Richtung orientiert.

Die Austrittsöffnungen 16a, 22a weisen zueinander jeweils einen gleichen Winkelabstand in Umfangsrichtung der Fluiddispergiereinheit 14a auf.

Im Folgenden wird nur einer der vier Dispergierflügel 40a und nur eine der vier Austrittsöffnungen 16a, 22a beschrieben, wobei die Beschreibung für alle Dispergierflügel 40a und für alle Austrittsöffnungen 16a gelten soll.

Der Dispergierflügel 40a ist in einer Drehebene der Fluiddispergiereinheit 14a gebogen ausgebildet. Der Dispergierflügel 40a erstreckt sich von einem mittelpunktnahen Bereich der Fluiddispergiereinheit 14a radial nach außen. Der Dispergierflügel 40a ist hohl ausgebildet. Der Dispergierflügel 40a steht in einer strömungstechnisch kommunizierenden Verbindung mit der Rührwelle 38a Der Dispergierflügel 40a definiert einen Fluidkanal 42a mit der Austrittsöffnung 16a.

In einer Schnittebene 70a zumindest im Wesentlichen quer zu einer Richtung einer Innenfluidströmung 54a durch den Fluidkanal 42a weist eine Außenbegrenzung 72a des Dispergierflügels 40a eine rechteckige Form auf. Alternativ könnte die Außenbegrenzung 72a des Dispergierflügels 40a in einer Schnittebene 70a zumindest im Wesentlichen quer zu einer Richtung der Innenfluidströmung 54a durch den Fluidkanal 42a eine ovale oder runde Form aufweisen.

Die Form der Austrittsöffnung 16a bei einer Blickrichtung senkrecht zur Haupterstreckungsebene 68a der Austrittsöffnung 16a und die Form der Außenbegrenzung 72a des Dispergierflügels 40a in der Schnittebene 70a zumindest im Wesentlichen quer zu einer Richtung der Innenfluidströmung 54a durch den Fluidkanal 42a sind sich im Wesentlichen gleich. Es ist vorstellbar, dass die Form der Austrittsöffnung 16a bei einer Blickrichtung senkrecht zur Haupterstreckungsebene 68a der Austrittsöffnung 16a und die Form der Außenbegrenzung 72a des Dispergierflügels 40a in der Schnittebene 70a zumindest im Wesentlichen quer zu einer Richtung der Innenfluidströmung 54a durch den Fluidkanal 42a unterschiedlich sind.

Die Schnittebene 70a und die Haupterstreckungsebene 68a der Austrittsöffnung 16a sind an der Austrittsöffnung 16a zumindest im Wesentlichen deckungsgleich. Die Rührorganvorrichtung 10a weist eine Optimierungseinheit 18a auf. Die Fluiddispergiereinheit 14a und die Optimierungseinheit 18a sind teilweise einstückig ausgebildet. Die Optimierungseinheit 18a erhöht in dem Betriebszustand einen Differenzdruck an der Austrittsöffnung 16a, 22a.

Die Optimierungseinheit 18a weist eine Kontureinheit 66a auf. Die Kontureinheit 66a ist an der Rührwelle 38a angeordnet. Die Kontureinheit 66a ist dazu vorgesehen, ein Eintritt des Fluids in die Eintrittsöffnungen 44a zu begünstigen. Die Kontureinheit 66a weist ein Konturelement 62a auf. Die Kontureinheit 66a weist mehrere Konturelemente 62a auf.

Das Konturelement 62a ist als Leitblech 64a ausgebildet. Das Konturelement 62a weist eine gebogene Formgebung auf. Das Konturelement 62a ist direkt an der Eintrittsöffnung 44a angeordnet. Jedes Konturelement 62a ist genau einer Eintrittsöffnung 44a zugeordnet. Das Konturelement 62a leitet das Fluid in Richtung der dem Konturelement 62a zugeordneten Eintrittsöffnung 44a. Die Konturelemente 62a sind jeweils jeder Eintrittsöffnung 44a zugeordnet.

Die Optimierungseinheit 18a weist eine Außendruckoptimierungseinheit 20a auf. Die Außendruckoptimierungseinheit 20a vermindert in dem Betriebszustand einen Außendruck hinter der Austrittsöffnung 16a, 22a.

Die Fluiddispergiereinheit 14a und die Außendruckoptimierungseinheit 20a sind teilweise einstückig miteinander ausgebildet.

Die Außendruckoptimierungseinheit 20a weist ein Schaufelrad 48a auf. Das Schaufelrad 48a weist ein Schaufelblatt 24a auf. Das Schaufelrad 48a weist ein weiteres Schaufelblatt 60a auf. Das Schaufelrad 48a weist vier Schaufelblätter 24a, 60a auf. Die Schaufelblätter 24a, 60a sind um die Drehachse 12a drehbar. Die Schaufelblätter 24a, 60a weisen zueinander jeweils einen gleichen Winkelabstand in Umfangsrichtung des Schaufelrads 48a auf. Die Schaufelblätter 24a, 60a sind zur Erzeugung einer Außenfluidströmung 50a vorgesehen. Eine Anzahl der Schaufelblätter 24a, 60a entspricht einer Anzahl der Austrittsöffnungen 16a, 22a.

Das Schaufelrad 48a ist unter der Fluiddispergiereinheit 14a angeordnet. Die Schaufelblätter 24a, 60a sind entlang der Drehachse 12a betrachtet zu den Austrittsöffnungen 16a, 22a versetzt nach unten angeordnet. Jedes Schaufelblatt 24a, 60a ist genau einer der Austrittsöffnungen 16a, 22a zugeordnet.

Die Außendruckoptimierungseinheit 20a erzeugt mittels der Schaufelblätter 24a, 60a in dem Betriebszustand eine Außenfluidströmung 50a. Die Außenfluidströmung 50a ist in einem Strömungsabschnitt parallel zur Drehachse 12a ausgerichtet (vgl. Fig. 1).

Die Außendruckoptimierungseinheit 20a weist ein Strömungsleitelement 26a auf. Das Strömungsleitelement 26a ist oberhalb der Austrittsöffnungen 16a, 22a angeordnet. Das Strömungsleitelement 26a ist als eine geschlossene Scheibe ausgebildet. Das Strömungsleitelement 26a ist mit der Fluiddispergiereinheit 14a einstückig ausgebildet. Das Strömungsleitelement 26a ist zur Umlenkung der Außenfluidströmung 50a in eine zur Drehachse 12a der Fluiddispergiereinheit 14a senkrechte Richtung vorgesehen.

Die Außendruckoptimierungseinheit 20a vermindert in dem Betriebszustand den Fluidaustritt behindernden Außendruck. Die Außendruckoptimierungseinheit 20a reduziert in dem Betriebszustand eine Beeinflussung des Fluidaustritts aus der Austrittsöffnung 16a durch den weiteren Fluidaustritt aus der weiteren Austrittsöffnung 22a, welche in Drehrichtung 36a betrachtet vor der Austrittsöffnung 16a liegt.

Die Austrittsöffnung 16a und die weitere Austrittsöffnung 22a bilden zusammen eine Dispergierzelle 56a. Jede Austrittsöffnung 16a mit einer direkt an diese nachfolgenden Austrittsöffnung 16a bildet eine eigene Dispergierzelle 56a.

Die nachfolgende Beschreibung soll für alle Fluidaustritte an allen vier Austrittsöffnungen 16a gelten, wobei hier lediglich der Fluidaustritt an einer der vier Austrittsöffnungen 16a beschrieben ist. Durch den Fluidaustritt an der Austrittsöffnung 16a am Dispergierflügel 40a bilden sich in der Dispergierzelle 56a Wirbel am dem Dispergierflügel 40a in Drehrichtung 36a der Fluiddispergiereinheit 14a nachfolgenden Dispergierflügel 40a. Das durch das Schaufelblatt 24a beförderte weitere Fluid spült die Wirbel fort. Dadurch erhöht das weitere Fluid innerhalb der Dispergierzelle 56a eine mittlere Dichte am Dispergierflügel 40a mit der weiteren Austrittsöffnung 22a.

Die Fluiddispergiereinheit 14a weist eine vierzellige Symmetrie auf. Die Dispergierzellen 56a sind symmetrisch an einem Umfang der Fluiddispergiereinheit 14a angeordnet. Jede Dispergierzelle 56a ist durch eine Drehung um 90° in Drehrichtung 36a mit der direkt dieser nachfolgenden Dispergierzelle 56a in Überdeckung bringbar. Jede Dispergierzelle 56a ist durch eine Drehung mit 360° um die Drehachse 12a in sich selbst überführbar. Die Fluiddispergiereinheit 14a kann eine beliebige n-zellige Symmetrie aufweisen, wobei n eine Anzahl der Austrittsöffnungen 16a, 22a ist.

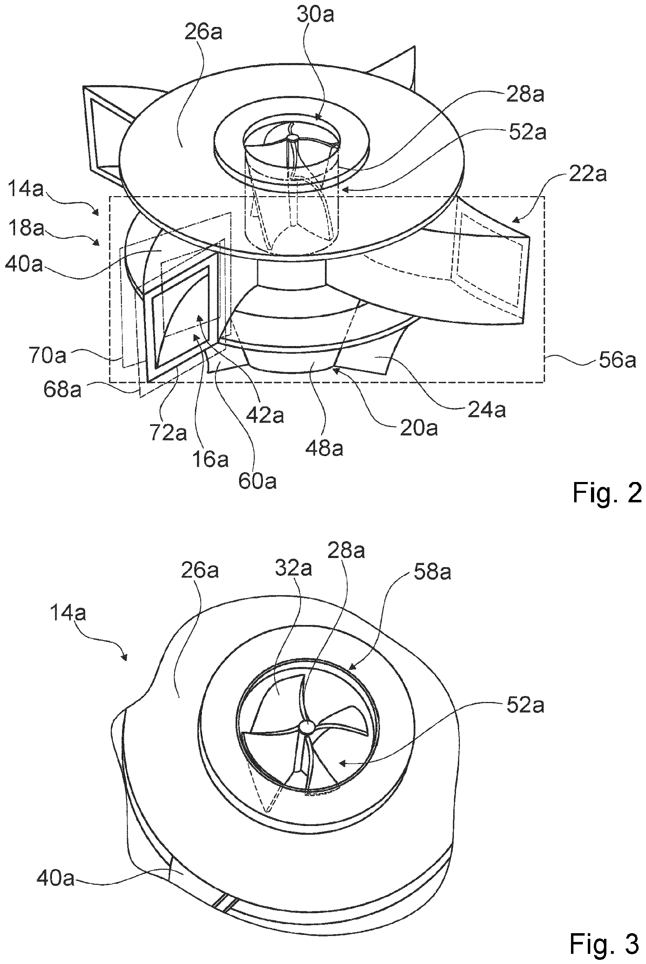

Die Fluiddispergiereinheit 14a weist einen Aufnahmeraum 52a auf (vgl. Fig. 3). Der Aufnahmeraum 52a ist zylinderförmig ausgebildet. Die Optimierungseinheit 18a weist eine Innendruckoptimierungseinheit 58a auf. Die Innendruckoptimierungseinheit 58a erhöht in dem Betriebszustand einen Innendruck. Die Innendruckoptimierungseinheit 58a ist vollständig innerhalb der Fluiddispergiereinheit 14a angeordnet.

Die Innendruckoptimierungseinheit 58a weist eine Fluidförderungseinheit 28a auf. Die Fluidförderungseinheit 28a ist turbinenförmig ausgebildet. Die Fluidförderungseinheit 28a ist vollständig innerhalb der Fluiddispergiereinheit 14a angeordnet. Die Fluidförderungseinheit 28a ist vollständig innerhalb des Aufnahmeraums 52a angeordnet (vgl. Fig. 1 bis Fig. 3).

Die Fluidförderungseinheit 28a weist mehrere Leitschaufeln 32a auf. Die Anzahl der Austrittsöffnungen 16a, 22a entspricht einer Anzahl der Leitschaufeln 32a. Die Fluidförderungseinheit 28a weist vier Leitschaufeln 32a auf. Die Leitschaufeln 32a weisen jeweils eine geschwungene Formgebung auf. Die Leitschaufeln 32a weisen zueinander jeweils einen gleichen Winkelabstand in Umfangsrichtung der Fluidförderungseinheit 28a auf.

Der Aufnahmeraum 52a und/oder ein Übergangsbereich des Aufnahmeraums 52a zu dem Fluidkanal 42a ist glatt und/oder kantenfrei ausgebildet. Mit dem Fluid in Kontakt tretende Oberflächen der Fluidförderungseinheit 28a sind glatt und/oder kantenfrei ausgebildet.

In dem Betriebszustand versetzt der Elektromotor 46a die Rührwelle 38a in eine Drehung um die Drehachse 12a. Die mit der Rührwelle 38a drehfest verbundene Fluiddispergiereinheit 14a rotiert in dem Betriebszustand um die Drehachse 12a. In dem Betriebszustand entsteht an dem Austrittsöffnungen 16a, 22a ein Unterdruck. In dem Betriebszustand strömt das Fluid durch die Eintrittsöffnungen 44a in die Rührwelle 38a. Die Rührwelle 38a ist mit dem Aufnahmeraum 52a strömungstechnisch verbunden. Durch einen Differenzdruck zwischen den Eintrittsöffnungen 44a und den Austrittsöffnungen 16a, 22a entsteht die Innenfluidströmung 54a. Die Innenfluidströmung 54a verläuft von den Eintrittsöffnungen 44a zunächst durch die Rührwelle 38a und anschließend durch die Fluiddispergiereinheit 14a zu den Austrittsöffnungen 16a, 22a.

Im Betriebszustand gelangt das Fluid zu dem Aufnahmeraum 52a. Die Leitschaufeln 32a der Fluidförderungseinheit 28a befördern das Fluid in dem drehachsennahen Bereich 30a parallel zur Drehachse 12a. Die Fluidförderungseinheit 28a befördert das Fluid aus einem drehachsennahen Bereich 30a der Fluiddispergiereinheit 14a radial nach außen in Richtung der Austrittsöffnung 16a.

Die Fluidförderungseinheit 28a erzeugt in dem Betriebszustand die optimierte Innenfluidströmung 54a. Die Fluidförderungseinheit 28a erzeugt in dem Betriebszustand die wirbelfreie Innenfluidströmung 54a. Die Fluidförderungseinheit 28a vermindert in dem Betriebszustand einen Druckverlust.

Es ist denkbar, dass die Rührorganvorrichtung 10a drei verschiedene Fluide miteinander vermischt und/oder dispergiert. Hierbei sind die Eintrittsöffnungen 44a in einem Fluid mit einer geringsten Dichte, die Außendruckoptimierungseinheit 20a in einem zweiten Fluid mit einer höchsten Dichte und die Fluiddispergiereinheit 14a in einem dritten Fluid mit einer mittleren Dichte, deren Wert zwischen einem Wert für die geringste Dichte und einem Wert für die höchste Dichte liegt. Zudem kann zumindest einem der drei Fluide zumindest eine feste Phase, beispielsweise ein Katalysator beigemischt sein.

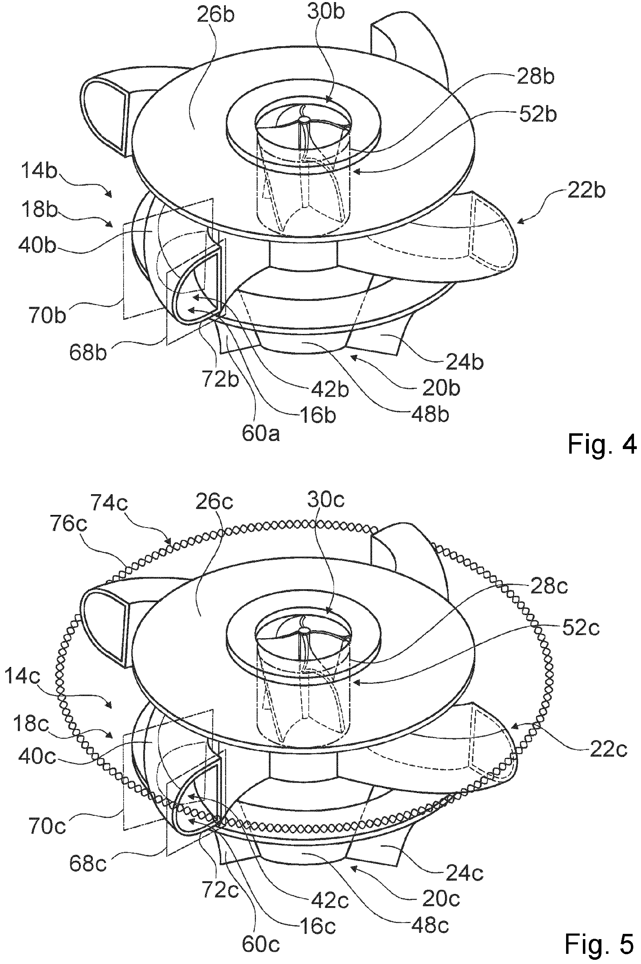

Fig. 4 zeigt ein alternatives Ausführungsbeispiel einer Rührorganvorrichtung 10b. Zur Vermeidung unnötiger Wiederholungen werden daher für gleiche Baugruppen gleiche Bezugszeichen verwendet und es wird auf die Ausführungen der Fig. 1 bis 3 verwiesen. Nachfolgend wird nur auf die Details eingegangen, durch die sich das Ausführungsbeispiel der Fig. 1 bis 3 von dem alternativen Ausführungsbeispiel der Fig. 4 unterscheidet. Zur Unterscheidung der Ausführungsbeispiele ist der Buchstabe b den Bezugszeichen des alternativen Ausführungsbeispiels in der Fig. 4 nachgestellt.

Fig. 4 zeigt eine perspektivische schematische Darstellung einer Fluiddispergiereinheit 14b einer alternativen Rührorganvorrichtung 10b und einer Optimierungseinheit 18b der alternativen Rührorganvorrichtung 10b mit einer Fluidförderungseinheit 28b.

Die Fluiddispergiereinheit 14b weist eine Austrittsöffnung 16b auf. Die Austrittsöffnung 16b weist bei einer Blickrichtung senkrecht zu einer Haupterstreckungsebene 68b der Austrittsöffnung 16b eine halbrunde Form auf. Alternativ könnte die Austrittsöffnung 16b bei einer Blickrichtung senkrecht zur Haupterstreckungsebene 68b der Austrittsöffnung 16b eine ovale oder runde Form aufweisen.

Die Fluiddispergiereinheit 14b weist eine weitere Austrittsöffnung 22b auf. Die weitere Austrittsöffnung 22b ist in Drehrichtung 36b der Fluiddispergiereinheit 14b betrachtet vor der Austrittsöffnung 16b angeordnet.

Die Fluiddispergiereinheit 14b weist vier Austrittsöffnungen 16b, 22b auf. Die Austrittsöffnungen 16b, 22b sind jeweils für einen Fluidaustritt vorgesehen. Die Fluiddispergiereinheit 14b weist vier Dispergierflügel 40b auf. Jeder der vier Dispergierflügel 40b definiert jeweils eine der Austrittsöffnungen 16b, 22b. Die Dispergierflügel 40b sind jeweils als Rührblatt ausgebildet.

In dem Betriebszustand sind die Austrittsöffnungen 16b, 22b bei einer Drehung der Fluiddispergiereinheit 14b in Drehrichtung 36b in eine der Drehrichtung 36b entgegengesetzte Richtung orientiert.

Die Austrittsöffnungen 16b, 22b weisen zueinander jeweils einen gleichen Winkelabstand in Umfangsrichtung der Fluiddispergiereinheit 14b auf.

Im Folgenden wird nur einer der vier Dispergierflügel 40b und nur eine der vier Austrittsöffnungen 16b, 22b beschrieben, wobei die Beschreibung für alle Dispergierflügel 40b und für alle Austrittsöffnungen 16b gelten soll.

Der Dispergierflügel 40b ist in einer Drehebene der Fluiddispergiereinheit 14b gebogen ausgebildet. Der Dispergierflügel 40b erstreckt sich von einem mittelpunktnahen Bereich der Fluiddispergiereinheit 14b radial nach außen. Der Dispergierflügel 40b ist hohl ausgebildet. Der Dispergierflügel 40b steht in einer strömungstechnisch kommunizierenden Verbindung mit einer Rührwelle 38b. Der Dispergierflügel 40b definiert einen Fluidkanal 42b mit der Austrittsöffnung 16b.

In einer Schnittebene 70b, zumindest im Wesentlichen quer zu einer Richtung einer Innenfluidströmung 54b durch den Fluidkanal 42b, weist eine Außenbegrenzung 72b des Dispergierflügels 40b eine halbrunde Form auf.

Die Form der Austrittsöffnung 16b bei einer Blickrichtung senkrecht zur Haupterstreckungsebene 68b der Austrittsöffnung 16b und die Form der Außenbegrenzung 72b des Dispergierflügels 40b in der Schnittebene 70b zumindest im Wesentlichen quer zu einer Richtung der Innenfluidströmung 54b durch den Fluidkanal 42b sind sich im Wesentlichen gleich. Es ist vorstellbar, dass die Form der Austrittsöffnung 16b bei einer Blickrichtung senkrecht zur Haupterstreckungsebene 68b der Austrittsöffnung 16b und die Form der Außenbegrenzung 72b des Dispergierflügels 40b in der Schnittebene 70b zumindest im Wesentlichen quer zu einer Richtung der Innenfluidströmung 54b durch den Fluidkanal 42b unterschiedlich sind.

Die Schnittebene 70b ist zumindest im Wesentlichen parallel zur Haupterstreckungsebene 68b der Austrittsöffnung 16b ausgerichtet.

Fig. 5 zeigt eine perspektivische schematische Darstellung einer Fluiddispergiereinheit 14c einer alternativen Rührorganvorrichtung 10c und einer Optimierungseinheit 18c der alternativen Rührorganvorrichtung 10c mit einer Fluidförderungseinheit 28c.

Zur Vermeidung unnötiger Wiederholungen werden daher für gleiche Baugruppen gleiche Bezugszeichen verwendet und es wird auf die Ausführungen der Fig. 1 bis 4 verwiesen. Nachfolgend wird nur auf die Details eingegangen, durch die sich das Ausführungsbeispiel der Fig. 1 bis 4 von dem weiteren alternativen Ausführungsbeispiel der Fig. 5 unterscheidet. Zur Unterscheidung der Ausführungsbeispiele ist der Buchstabe c den Bezugszeichen des weiteren alternativen Ausführungsbeispiels in der Fig. 5 nachgestellt.

Die Fluiddispergiereinheit 14c weist eine Turbulenzeinheit 74c auf. Die Turbulenzeinheit 74c ist spiralförmig ausgebildet. Die Turbulenzeinheit 74c weist eine Spirale 76c auf. Es ist denkbar, dass die Turbulenzeinheit 74c mehrere Spiralen 76c aufweist, welche in zumindest einem Betriebszustand insbesondere um sich gewickelt sind. Es ist denkbar, dass mehrere Spiralen 76c untereinander angeordnet sind. Es ist zudem denkbar, dass die Spirale 76c zumindest teilweise an einem Stab der Fluiddispergiereinheit 14c angeordnet ist.

Die Turbulenzeinheit 74c ist entlang einer Drehachse 12c der Fluiddispergiereinheit 14c betrachtet in einem äußeren Bereich der Rührorganvorrichtung 10c angeordnet. Die Turbulenzeinheit 74c ist zwischen Dispergierflügeln 40c angeordnet.

Die Turbulenzeinheit 74c ist dazu vorgesehen, einen Übergang des Fluids in das weitere Fluid zu begünstigen. Nach einem Austreten des Fluids aus einer Austrittsöffnung 16c umströmt das Fluid zumindest teilweise die Turbulenzeinheit 74c. Die Turbulenzeinheit 74c erzeugt in einem Nahbereich der Turbulenzeinheit 74c Turbulenzen und/oder Scherkräfte. Die Turbulenzen und/oder Scherkräfte verteilen das Fluid.

Im Fall, dass das Fluid als gasförmige Phase vorliegt, verringert die Turbulenzeinheit 74c einen Durchmesser von aus der Austrittsöffnung 16c und/oder aus einer weiteren Austrittsöffnung 22c austretenden Primärgasblasen des Fluids. Die Turbulenzeinheit 74c zerkleinert die aus der Austrittsöffnung 16c und/oder aus der weiteren Austrittsöffnung 22c austretenden Primärgasblasen in mehrere kleinere Gasblasen.

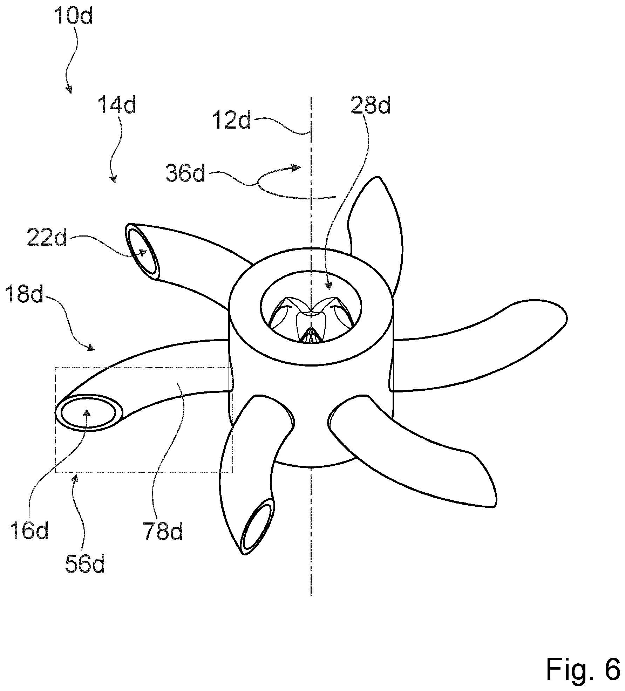

Fig. 6 zeigt eine perspektivische schematische Darstellung einer Fluiddispergiereinheit 14d einer Rührorganvorrichtung 10d und einer Optimierungseinheit 18d der Rührorganvorrichtung 10d mit einer Fluidförderungseinheit 28d.

Zur Vermeidung unnötiger Wiederholungen werden daher für gleiche Baugruppen gleiche Bezugszeichen verwendet und es wird auf die Ausführungen der Fig. 1 bis 5 verwiesen. Nachfolgend wird nur auf die Details eingegangen, durch die sich die Ausführungsbeispiele der Fig. 1 bis 5 von dem weiteren alternativen Ausführungsbeispiel der Fig. 6 unterscheidet. Zur Unterscheidung der Ausführungsbeispiele ist der Buchstabe d den Bezugszeichen des Ausführungsbeispiels in der Fig. 6 nachgestellt.

Im Unterschied zu den Ausführungsbeispielen der Figuren 1 bis 5 weist die Fluiddispergiereinheit 14d eine Symmetrie auf. Die Fluiddispergiereinheit 14d weist sechs Rundrohre 78d auf, welche symmetrisch an einem Umfang der Fluiddispergiereinheit 14d angeordnet sind. Jedes der Rundrohre 78d bildet eine Dispergierzelle 56d aus. Jedes der Rundrohre 78d ist durch eine Drehung um 60° in Drehrichtung 36d mit dem direkt diesem nachfolgenden Rundrohre 78d in Überdeckung bringbar. Jedes der Rundrohre 78d ist durch eine Drehung um 360° um die Drehachse 12d in sich selbst überführbar. An jedem der Rundrohre 78d ist eine Fluidaustrittsöffnung 16d, 22d angeordnet.

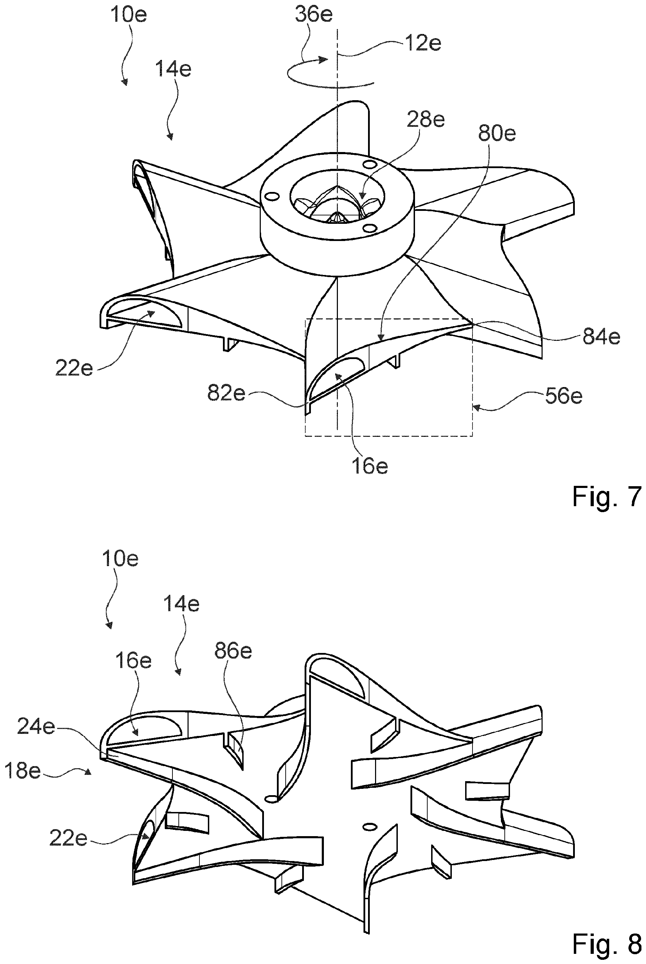

In den Figuren 7 und 8 sind eine Fluiddispergiereinheit 14e einer Rührorganvorrichtung 10e und eine Optimierungseinheit 18e der Rührorganvorrichtung 10e mit einer Fluidförderungseinheit 28e in zwei schematischen perspektivischen Ansichten dargestellt.

Zur Vermeidung unnötiger Wiederholungen werden für gleiche Baugruppen gleiche Bezugszeichen verwendet und es wird auf die Ausführungen der Fig. 1 bis 6 verwiesen. Nachfolgend wird nur auf die Details eingegangen, durch die sich die Ausführungsbeispiele der Fig. 1 bis 6 von dem Ausführungsbeispiel der Fig. 7 und 8 unterscheidet. Zur Unterscheidung der Ausführungsbeispiele ist der Buchstabe e den Bezugszeichen des Ausführungsbeispiels der Fig. 7 und 8 nachgestellt.

Die Fluiddispergiereinheit 14e weist eine Symmetrie auf. Die Fluiddispergiereinheit 14e weist sechs Dispergierzellen 56e auf, welche symmetrisch an einem Umfang der Fluiddispergiereinheit 14e angeordnet sind. Jedes Dispergierzelle ist durch eine Drehung um 60° in Drehrichtung 36e mit der direkt dieser nachfolgenden Dispergierzelle 56e in Überdeckung bringbar. Jede Dispergierzelle 56e ist durch eine Drehung um 360° um eine Drehachse 12e der Fluiddispergiereinheit 14e in sich selbst überführbar. Jede der Dispergierzellen 56e weist eine Austrittsöffnung 16e, 22e auf.

In einer Blickrichtung senkrecht auf die Drehachse 12e weist die Fluiddispergiereinheit 14e zumindest bereichsweise eine Form eines Tragflächenprofils 80e auf. Bei Betrachtung der Dispergierzelle 56e der Fluiddispergiereinheit 14e weist die Fluiddispergiereinheit 14 eine der Drehrichtung 36e zugewandte Profilnase 82e und eine der Drehrichtung 36e abgewandte Profilhinterkante 84e auf. Die Profilnase 82e und die Profilhinterkante 84 begrenzen einen Bereich der Fluiddispergiereinheit 14e mit der Form des Tragflächenprofils 80e. Ausgehend von der Profilnase 82e erstreckt sich die Austrittsöffnung 16e in Richtung der Profilhinterkante 84e und weist eine halbovalen Querschnitt auf.

Figur 8 zeigt eine weitere Ansicht der Fluiddispergiereinheit 14e. Die Optimierungseinheit 18e weist ein Schaufelblatt 24e auf. Das Schaufelblatt 24e ist der Austrittsöffnung 16e zugeordnet. Das Schaufelblatt 24e weist eine in der Drehrichtung 36e geschwungene Form auf. Die Optimierungseinheit 18e weist ein weiteres Schaufelblatt 86e auf. Das weitere Schaufelblatt 86e ist der Austrittsöffnung 16e zugeordnet. Das weitere Schaufelblatt 86e ist von dem Schaufelblatt 24e beabstandet angeordnet.

### Bezugszeichen

- 10: Rührorganvorrichtung
- 12: Drehachse
- 14: Fluiddispergiereinheit
- 16: Austrittsöffnung
- 18: Optimierungseinheit
- 20: Außendruckoptimierungseinheit
- 22: weitere Austrittsöffnung
- 24: Schaufelblatt
- 26: Strömungsleitelement
- 28: Fluidförderungseinheit
- 30: drehachsennaher Bereich
- 32: Leitschaufel
- 34: Rührorgan
- 36: Drehrichtung
- 38: Rührwelle
- 40: Dispergierflügel
- 42: Fluidkanal
- 44: Eintrittsöffnung
- 46: Elektromotor
- 48: Schaufelrad
- 50: Außenfluidströmung
- 52: Aufnahmeraum
- 54: Innenfluidströmung
- 56: Dispergierzelle
- 58: Innendruckoptimierungseinheit
- 60: weiteres Schaufelblatt
- 62: Konturelement
- 64: Leitblech
- 66: Kontureinheit
- 68: Haupterstreckungsebene
- 70: Schnittebene
- 72: Außenbegrenzung
- 74: Turbulenzeinheit
- 76: Spirale
- 78: Rundrohr
- 80: Tragflächenprofil
- 82: Profilnase
- 84: Profilhinterkante
- 86: weiteres Schaufelblatt

## Patentansprüche

1. Rührorganvorrichtung (10a; 10b; 10c; 10d; 10e), insbesondere zum Vermischen eines Fluids mit wenigstens einem weiteren Fluid, mit zumindest einer um eine Drehachse (12a; 12b; 12c; 12d; 12e) drehbaren Fluiddispergiereinheit (14a; 14b; 14c;14d; 14e), welche wenigstens eine Austrittsöffnung (16a; 16b; 16c; 16d; 16e) für zumindest einen Fluidaustritt aufweist, **gekennzeichnet durch** zumindest eine Optimierungseinheit (18a; 18b; 18c; 18d; 18e), welche in zumindest einem Betriebszustand zumindest einen Differenzdruck an der Austrittsöffnung (16a; 16b; 16c, 16d; 16e) erhöht.

2. Rührorganvorrichtung (10a; 10b; 10c; 10d; 10e) nach Anspruch 1, **dadurch gekennzeichnet, dass** die Optimierungseinheit (18a; 18b; 18c; 18d; 18e) zumindest eine Außendruckoptimierungseinheit (20a; 20b; 20c; 20d; 20e) aufweist, welche in dem Betriebszustand zumindest einen dem Fluidaustritt entgegenwirkenden Außendruck verringert.

3. Rührorganvorrichtung (10a; 10b; 10c, 10d; 10e) nach Anspruch 1 oder 2, **dadurch gekennzeichnet, dass** die Fluiddispergiereinheit (14a; 14b; 14c; 14d; 14e) eine weitere Austrittsöffnung (22a; 22b; 22c; 22d; 22e) für zumindest einen weiteren Fluidaustritt aufweist, welche in Drehrichtung (36a; 36b; 36c; 36d; 36e) der Fluiddispergiereinheit (14a; 14b; 14c; 14d; 14e) betrachtet vor der Austrittsöffnung (16a; 16b; 16c; 16d; 16e) angeordnet ist, wobei die Optimierungseinheit (18a; 18b; 18c; 18d; 18e) in dem Betriebszustand zumindest eine Beeinflussung des Fluidaustritts durch den weiteren Fluidaustritt reduziert.

4. Rührorganvorrichtung (10a; 10b; 10c; 10d; 10e) nach einem der vorhergehenden Ansprüche, **dadurch gekennzeichnet, dass** die Optimierungseinheit (18a; 18b; 18c; 18d; 18e) in dem Betriebszustand zumindest eine Außenfluidströmung (50a; 50b; 50c; 50d; 50e) erzeugt, welche in zumindest einem Strömungsabschnitt zumindest im Wesentlichen parallel zur Drehachse (12a; 12b; 12c; 12d; 12e) der Fluiddispergiereinheit (14a; 14b; 14c, 14d; 14e) ausgerichtet ist.

5. Rührorganvorrichtung (10a; 10b; 10c; 10d; 10e) nach Anspruch 4, **dadurch gekennzeichnet, dass** die Optimierungseinheit (18a; 18b; 18c; 18d; 18e) zumindest ein um die Drehachse (12a; 12b; 12c; 12d; 12e) der Fluiddispergiereinheit (14a; 14b; 14c; 14d; 14e) drehbares Schaufelblatt (24a; 24b; 24c; 24d; 24e) zur zumindest teilweisen Erzeugung der Außenfluidströmung (50a; 50b; 50c; 50d; 50e) aufweist.

6. Rührorganvorrichtung (10a; 10b; 10c; 10d; 10e) nach Anspruch 5, **dadurch gekennzeichnet, dass** das Schaufelblatt (24a; 24b; 24c; 24d; 24e) der Austrittsöffnung (16a; 16b; 16c; 16d; 16e) zugeordnet ist.

7. Rührorganvorrichtung (10a; 10b; 10c; 10d; 10e) nach Anspruch 6, **dadurch gekennzeichnet, dass** das Schaufelblatt (24a; 24b; 24c; 24d; 24e) entlang der Drehachse (12a; 12b; 12c; 12d; 12e) betrachtet zur Austrittsöffnung (16a; 16b; 16c; 16d; 16e) versetzt angeordnet ist.

8. Rührorganvorrichtung (10a; 10b; 10c; 10d; 10e) nach einem der Ansprüche 4 bis 7, **dadurch gekennzeichnet, dass** die Optimierungseinheit (18a; 18b; 18c; 18d; 18e) zumindest ein Strömungsleitelement (26a; 26b; 26c; 26d; 26e) zur Umlenkung der Außenfluidströmung (50a; 50b; 50c; 50d; 50e) in eine zumindest im Wesentlichen zur Drehachse (12a; 12b; 12c; 12d; 12e) der Fluiddispergiereinheit (14a; 14b; 14c; 14d;14e) senkrechte Richtung aufweist.

9. Rührorganvorrichtung (10a; 10b; 10c; 10d; 10e) nach einem der vorhergehenden Ansprüche, **dadurch gekennzeichnet, dass** die Optimierungseinheit (18a; 18b; 18c; 18d; 18e) zumindest eine Innendruckoptimierungseinheit (58a; 58b; 58c; 58d; 58e) aufweist, welche in dem Betriebszustand zumindest einen den Fluidaustritt begünstigenden Innendruck erhöht.

10. Rührorganvorrichtung (10a; 10b; 10c; 10d; 10e) nach einem der vorhergehenden Ansprüche, **dadurch gekennzeichnet, dass** die Optimierungseinheit (18a; 18b; 18c; 18d; 18d) zumindest eine Fluidförderungseinheit (28a; 28b; 28c; 28d; 28e) aufweist, welche in dem Betriebszustand eine optimierte Innenfluidströmung (54a; 54b; 54c; 54d; 54e) erzeugt.

11. Rührorganvorrichtung (10a; 10b; 10c; 10d; 10e) nach Anspruch 10, **dadurch gekennzeichnet, dass** die Fluidförderungseinheit (28a; 28b; 28c; 28d; 28e) das Fluid in dem Betriebszustand aus zumindest einem drehachsennahen Bereich (30a; 30b; 30c; 30d; 30e) der Fluiddispergiereinheit (14a; 14b; 14c; 14d; 14e) zumindest teilweise radial nach außen in Richtung der Austrittsöffnung (16a; 16b; 16c, 16d; 16e) befördert.

12. Rührorganvorrichtung (10a; 10b; 10c; 10d; 10e) nach Anspruch 11, **dadurch gekennzeichnet, dass** die Fluidförderungseinheit (28a; 28b; 28c; 28d; 28e) zumindest eine Leitschaufel (32a; 32b; 32c, 32d; 32e) aufweist, welche eine geschwungene Formgebung aufweist und welche das Fluid in dem drehachsennahen Bereich (30a; 30b; 30c; 30d; 30e) zumindest im Wesentlichen parallel zur Drehachse (12a; 12b; 12c; 12d; 12e) der Fluiddispergiereinheit (14a; 14b; 14c; 14d; 14e) befördert.

13. Rührorganvorrichtung (10a; 10b; 10c; 10d; 10e) nach einem der Ansprüche 10 bis 12, **dadurch gekennzeichnet, dass** die Fluidförderungseinheit (28a; 28b; 28c; 28d; 28d) vollständig innerhalb der Fluiddispergiereinheit (14a; 14b; 14c; 14d; 14e) angeordnet ist.

14. Rührorganvorrichtung (10a; 10b; 10c; 10d; 10e) nach einem der Ansprüche 10 bis 13, **dadurch gekennzeichnet, dass** mit dem Fluid in Kontakt tretende Oberflächen der Fluidförderungseinheit (28a; 28b; 28c; 28d; 28e) zumindest im Wesentlichen glatt und/oder kantenfrei ausgebildet sind.

15. Rührorganvorrichtung (10c) nach einem der vorhergehenden Ansprüche, **dadurch gekennzeichnet, dass** die Fluiddispergiereinheit (14c) zumindest eine Turbulenzeinheit (74c) zur Beeinflussung des Fluidaustritts und/oder des weiteren Fluidaustritts aufweist.

16. Rührorganvorrichtung (10d) nach einem der vorhergehenden Ansprüche, **dadurch gekennzeichnet, dass** die Fluiddispergiereinheit (14d) zumindest ein im Wesentlichen senkrecht zu der Drehachse (12d) angeordnetes Rundrohr (78d) aufweist an welchem die Austrittsöffnung (16d) angeordnet ist.

17. Rührorganvorrichtung (10e) nach einem der vorhergehenden Ansprüche, **dadurch gekennzeichnet, dass** die Fluiddispergiereinheit (14e) in zumindest einer Blickrichtung senkrecht auf die Drehachse (12e) zumindest bereichsweise eine Form eines Tragflächenprofils (80e) aufweist.

18. Rührorgan (34a; 34b; 34c; 34d; 34e) mit zumindest einer Rührorganvorrichtung (10a; 10b; 10c; 10d; 10e) nach einem der vorhergehenden Ansprüche.
